## Europäisches Patentamt

## European Patent Office

## Office européen des brevets

(11) Publication number: **0 201 562**
**B1**

(12) # EUROPEAN PATENT SPECIFICATION

(45) Date of publication of patent specification: **13.06.90**

(51) Int. Cl.⁵: **F 16 H 7/02,** F 16 H 7/04, F 16 G 1/28

(21) Application number: **85905699.6**

(22) Date of filing: **28.10.85**

(86) International application number:
**PCT/US85/02148**

(87) International publication number:
**WO 86/02982 22.05.86 Gazette 86/11**

(54) SYNCHRONOUS DRIVE SYSTEM.

(30) Priority: **15.11.84 US 671392**

(43) Date of publication of application:
**20.11.86 Bulletin 86/47**

(45) Publication of the grant of the patent:
**13.06.90 Bulletin 90/24**

(84) Designated Contracting States:
**BE FR IT**

(56) References cited:
**GB-A-2 116 287**
**US-A-4 233 852**
**US-A-4 337 056**
**US-A-4 403 979**
**US-A-4 427 403**

(73) Proprietor: **DAYCO PRODUCTS, Inc.**
**333 West First Street**
**Dayton Ohio 45402 (US)**

(72) Inventor: **WETZEL, Robert, E.**
**3063 South Oak**
**Springfield, MO 65804 (US)**

(74) Representative: **Madeuf, Claude Alexandre Jean et al**
**CABINET MADEUF 3, avenue Bugeaud**
**F-75116 Paris (FR)**

Courier Press, Leamington Spa, England.

## Description

This invention relates to an improved synchronous belt and pulley drive system, as specified in the first part of claim 1 known from GB—A—2116287.

It is also known to provide the combination of a toothed pulley and a toothed belt that has the teeth thereof serially mesh with pulley cavities that are respectively disposed between adjacent teeth of the pulley, with each belt tooth having a longitudinal cross-sectional configuration that defines a pair of spaced side face means that respectively have free end portions thereof that are remote from adjacent root means thereof, see the U.S. Patent to Miller, No. 3,756,091, and the U.S. Patent to Cicognani et al, No. 3,404,576.

It is also known to provide a non-conjugate action of the belt teeth with the pulley teeth to decrease contact stress, see the U.S. Patent to Szonn, No. 2,987,932; U.S. Patent to Berg, No. 3,026,737; U.S. Patent to Maruyama, No. 3,968,701; U.S. Patent to Weinberger, No. 4,007,644; and the U.S. Patent to Redmond, Jr. et al, No. 4,148,225.

It is the object of this invention to provide a combination of a toothed pulley and a toothed belt which relieves the high shear stress at the roots of the belt teeth, and which also reduces land area slapping.

In particular, it was found according to the teachings of this invention as defined in claim 1 that the belt teeth and the pulley teeth of a synchronous drive system could be constructed and arranged in such a way that the free end portions of each belt tooth could be compressed radially outwardly and inwardly toward each other by the respective adjacent pulley teeth before those adjacent pulley teeth make contact with the land areas of the belt on each side of that belt tooth while being spaced from the respective root means of that belt tooth, whereby the resulting pre-stressing and trapping of that belt tooth by those adjacent pulley teeth maintain that belt tooth in the pulley groove in a manner that is believed to reduce land wear and thereby extend the life of the belt.

This invention provides the combination of a toothed pulley and a toothed belt that has the teeth thereof serially mesh with pulley cavities that are respectively disposed between adjacent teeth of said pulley, with each belt tooth having a longitudinal cross-sectional configuration that defines a pair of spaced side face means that respectively have free end portions thereof that are remote from adjacent root means thereof; the improvement is that the teeth of said pulley and said belt are constructed and arranged in such a way that each belt tooth would have said pair of free end portions thereof compressed radially outwardly and inwardly toward each other by the respective adjacent pulley teeth if that belt tooth is fully received in said cavity between those respective adjacent pulley teeth, and those respective adjacent pulley teeth are just making contact with the land areas of the belt on each side of that belt tooth while being spaced from the respective root means of that belt tooth.

The features of the invention, and its technical advantages, can be seen from the following description of preferred embodiments, together with the claims and the accompanying drawings, in which:

Fig. 1 is a schematic view illustrating the synchronous drive system of this invention;

Fig. 2 is an enlarged fragmentary perspective view illustrating the improved belt of the drive system of Fig. 1;

Fig. 3 is an enlarged fragmentary cross-sectional view taken on line 3—3 of Fig. 2;

Fig. 4 is a fragmentary schematic cross-sectional view illustrating one of the teeth of the belt of this invention as it initially enters the cavity between a pair of pulley teeth of the pulley of the system illustrated in Fig. 1;

Fig. 5 is a view similar to Fig. 4 and illustrates a further movement between the belt tooth of Fig. 4 and the pulley teeth of Fig. 4;

Fig. 6 is a view similar to Fig. 4 and illustrates the theoretical pre-stressing of the belt tooth of Fig. 4 if that belt tooth of Fig. 4 is fully received into the cavity defined by the two pulley teeth, with those two pulley teeth just making contact with the land areas on opposite sides of that belt tooth while being spaced from the root means of the belt tooth;

Fig. 7 is a view similar to Fig. 4 and illustrates another emobdiment of this invention; and

Fig. 8 shows the embodiment of Fig. 7 in a view similar to Fig. 6.

While the various features of this invention are hereinafter illustrated and described as providing a synchronous drive system wherein the belt teeth are each substantially trapezoidal in their longitudinal cross-sectional configurations, and the pulley teeth are substantially curvilinear in their longitudinal cross-sectional configurations, it is to be understood that the various features of this invention can be utilized singly or in any combination thereof to provide a synchronous drive system wherein the belt teeth and/or the pulley teeth have different longitudinal cross-sectional configurations, while still providing the improved features of this invention.

Therefore, this invention is not to be limited to only the embodiments illustrated in the drawings, because the drawings are merely utilized to illustrate one of the wide variety of uses of this invention.

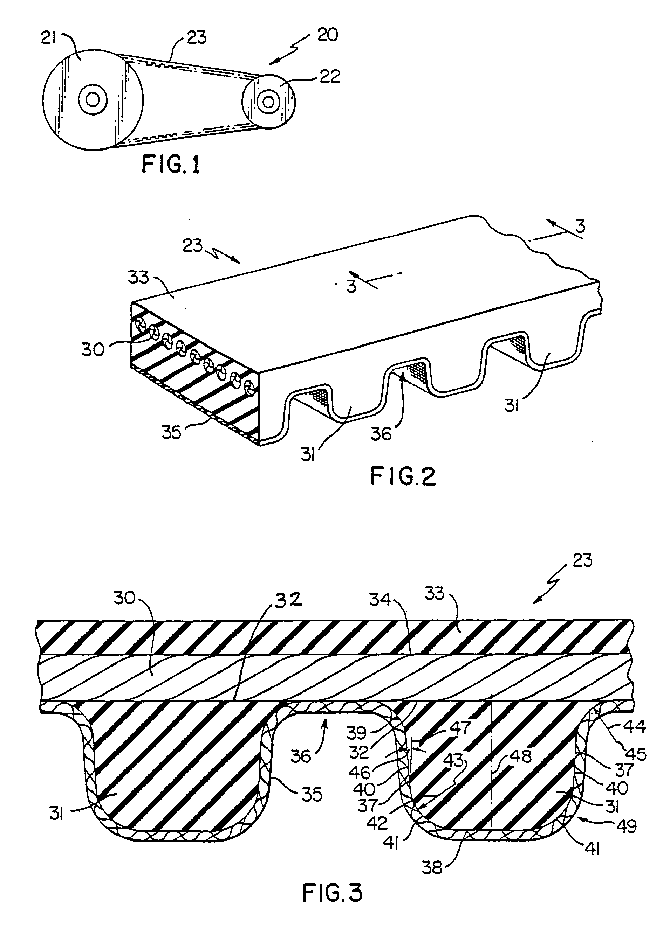

Referring now to Fig. 1, the improved synchronous drive system, or combination of a toothed pulley and a toothed belt that has the teeth thereof serially mesh with pulley cavities that are respectively disposed between adjacent teeth of the pulley, is generally indicated by the reference numeral 20. This drive system or combination 20 comprises a pair of toothed pulleys 21 and 22, and an endless toothed belt 23 that cooperates with the pulleys to transmit a driving relation between the pulleys 21 and 22 in a manner that is substantially conventional in the art, except for the improved features of this invention as hereinafter set forth. Such an arrangement is generally set forth in the aforementioned seven U.S. Patents.

The pulleys 21 and 22 can be formed of any suitable material, such as metallic material, and differ from each other in that the effective diameters thereof are different, whereby the number of teeth thereon are likewise different; but the overall configuration of the teeth thereof are basically the same.

However, it is to be understood that the configuration of the teeth of the pulleys 21 and 22 could be different as long as at least one of the pulleys 21 or 22 has the teeth thereof perform the inventive features of this invention with the belt 23 as hereinafter set forth.

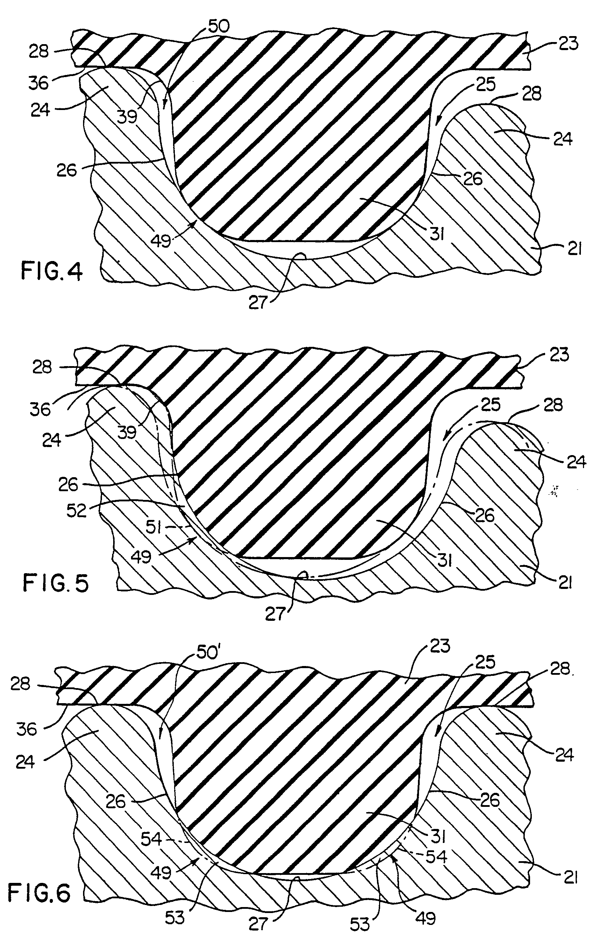

Accordingly, reference is now made to Figs. 4, 5 and 6, wherein it can be seen that the pulley 21 (and/or pulley 22) has a plurality of substantially curvilinear pulley teeth 24 extending around the periphery thereof, with each pair of adjacent teeth 24 defining a cavity 25 therebetween. The longitudinal cross-sectional configurations of the pulley teeth 24 define facing curvilinear side face means 26 that define the cavity 25 therebetween. The side face means 26 of adjacent pulley teeth 24 join together at the bottom 27 of the cavity 25, as illustrated in Fig. 4, and join with other side face means 26 to define outer tips 28 of the pulley teeth 24 that are also substantially curvilinear.

As previously stated, the longitudinal cross-sectional configuration of the pulley teeth 24 can be any suitable configuration which will produce the improved results of this invention as hereinafter set forth. However, in the embodiment illustrated in Figs. 4—6, the configuration of the pulley teeth 24 and, thus, of the pulley 21, is substantially the same as the pulley illustrated in Fig. 3 of the aforementioned U.S. Patent to Miller, No. 3,756,091, whereby further details of the pulley 21 need not be set forth.

The belt 23 of this invention is best illustrated in Figs. 2 and 3 and comprises a conventional tensile means 30 having a plurality of teeth 31 extending from the inner side 32 thereof and a backing member 33 extending from the outer side 34 thereof. The teeth 31 and the backing member 33 are mainly formed from any suitable fiber loaded or unloaded polymeric material or materials, and are formed in any suitable manner, such as in the manner set forth in the U.S. Patent to Skura, No. 3,078,206, the U.S. Patent to Wetzel, No. 4,343,666 and the EP—A—146564 published on 3.7.1985.

If desired, a conventional fabric layer 34 can cover the outer surface of the teeth 31 as well as the land areas 36 of the belt 23 that are disposed between adjacent teeth 31 in a conventional manner.

Each belt tooth 31 has a longitudinal cross-sectional configuration that is substantially trapezoidal and defines opposed side face means 37 that respectively join with a substantially flat bottom face means 38 and substantially curvilinear root means 39. Each side face 37 has a substantially flat or straight section 40 and an arcuate section 41, with the arcuate section 41 being defined by a radius 42 having its center 43 disposed intermediate the opposed side face means 37 of the respective tooth 31. Each arcuate root means 39 of each belt tooth 31 is defined by a radius 44 having its center 45 disposed outboard of the respective side face means 37. The flat section 40 of each side face means 37 of each belt tooth 31 joins with its respective arcuate root means 39 and with its arcuate section 41, while that arcuate section 41 joins with the flat bottom face means 38. The flat section 40 of each side face means 37 is disposed at an angle 46 relative to a line 47 which is substantially parallel to the transverse center line 48 of that respective belt tooth 31.

The arcuate section 41 of each side face means 37 of each belt tooth 31 defines at least part of a free end portion or corner means 49 of the belt tooth 31 that is disposed remote from the respective root means 39 of that belt tooth 31.

The size of the belt teeth 31 relative to the cavities 25 of the pulley 21 (and/or pulley 22) is selected in such a way that when a particular belt tooth 31 of the belt 23 as illustrated in Fig. 4 is initially received in the cavity 25 between an adjacent pair of pulley teeth 24, with the pulley 21 and belt 23 both rotating in a counterclockwise direction in Fig. 4, the left-hand land means 36 of the belt 23 makes contact with the top 28 of the left-hand pulley tooth 24, while the corner means 40 of that belt tooth 31 initially and respectively make contact with the opposed side faces 26 of the adjacent belt teeth 24.

At this time, it can be seen that a relatively wide gap or area 50 is provided between the left-hand root means 39 of the that belt tooth 31 and the adjacent surface or face means 26 of the left-hand pulley tooth 24, so that no stress is being placed on that root means 39.

Further rotation of the pulley means 21 and the belt means 23 in a counterclockwise direction from the position illustrated in Fig. 4 to the position illustrated in Fig. 5 causes the left-hand corner means 49 of the tooth 31 to be compressed, as represented by the dash-dotted line 51 in Fig. 5, before the left-hand root means 39 makes contact with the side face means 26 of the left-hand tooth 24, the line 51 being the normal outline profile of the belt tooth 31. In this manner, the left-hand corner means 49 of the belt tooth 31 is compressed radially outwardly and inwardly to the right by the amount represented by the area 52 in Fig. 5 that is bordered by the line 5 and the side face means 26 of the left-hand tooth 24. This compression takes up a considerably force in the belt tooth 31 at a point therein that is remote from the left-hand root means 39 before any force would be placed on the left-hand root area 39 of the belt 23.

It is believed that providing such compression area 52 in the belt tooth 31 remote from its respective root means 39 enhances the life of the belt means 23 by removing as much stress or strain in the root areas 39 of the belt teeth 31 as possible during their driving or driven operation with the pulley 21.

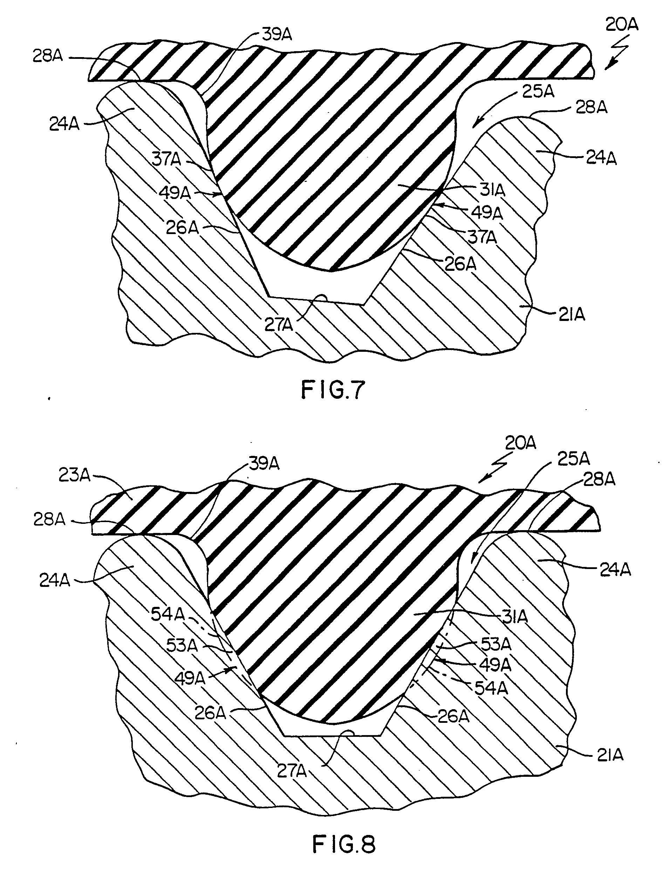

The configurations and arrangement of the belt teeth 31 and pulley teeth 24 are such that if the respective belt tooth 31 could be theoretically fully and uniformly received in the cavity 25 between the adjacent pulley teeth 24 in the manner illustrated in Fig. 6, the corner means 49 of the belt tooth 31 would be radially outwardly and inwardly compressed toward each other by the amount represented by the areas 53 in Fig. 6 that are bounded by the surface means 26 of the adjacent pulley teeth 24 and the normal profile outline of the belt tooth 31 represented by the dash-dotted lines 54 in Fig. 6; at the time, the pulley teeth 24 have the tips 28 thereof just engaging the adjacent land areas 36 of the belt 23 on each side of that belt tooth 31, while the side face means 26 of the adjacent pulley teeth 24 are respectively spaced from the adjacent root means 39 of the belt tooth 31 by the large gaps 50' illustrated in Fig. 6, whereby theoretically no force or stress is being imposed on the root means 39 or land areas 36 at this time.

In this manner, it can be seen that each belt tooth 31 of the belt 23 of this invention cooperates with its receiving cavity 25 between adjacent pulley teeth 24 by having both of the corner means 49 thereof compressed radially outwardly and inwardly toward each other via the trapping effect of the side face means 26 of the adjacent pulley teeth 24; this trapping effect produces both a radial and horizontal pre-stressing of the belt tooth 31 before the root means 39 and land areas 36 of the belt 23 are subsequently stressed by further action between the respective belt tooth 31 and pulley teeth 24 via the normal work load being imposed thereon. It is believed that this pre-stressing effect results in increased belt life and reduced noise by relieving the high shear stress at the root means 39 of each belt tooth 31, and results in a reduced land area slapping by the fact that the land areas 36 engage the tips 28 of the teeth 24.

While this invention is not to be limited to any particular configurations or dimensions, one belt 23 of this invention that has been utilized in pulleys 21 and 22 formed similar to the aforementioned U.S. Patent to Miller, No. 3,756,091, wherein generally the radius of curvature of each cavity 25 is approximately 0.103 of an inch and the cavity depth is approximately 0.142 of an inch, had the pitch of the belt teeth 31 thereof approximately 0.31496 of an inch, the number of belt teeth being 120, the belt pitch length being approximately 37.795275 inches, and the belt pitch diameter being approximately 12.030609 inches (1 inch=25.4 mm). The belt teeth 31 of such belt 23 each had an overall height along the center line 48 from the bottom surface face 38 to approximately the inner side 32 of the tensile means 30 of approximately 0.130 of an inch, with the distance between the corner means 49 thereof being approximately 0.182 of an inch, each radius 42 thereof being approximately 0.060 of an inch, each radius 44 thereof being approximately 0.031 of an inch and the flat sections 40 thereof making an included angle of approximately 9°.

Such a belt provided the gross interference during engagement with the pulley as previously described, and this actually increased belt life as well as provided a quieter drive system. For example, the prior known belt for such a system had a belt life of approximately 122.7 hours, whereas the life of the belt 23 of this invention was approximately 193.6 hours.

As previously stated, the particular configurations of the pulley teeth 24, and the belt teeth 31 cooperating therewith in the unique manner provided by this invention, can be provided by other configurations than those illustrated in the drawings and previously described.

For example, reference is now made to Figs. 7 and 8 wherein another synchronous drive system of this invention is generally indicated by the reference numeral 20A, with parts thereof similar to the drive system 20 previously described being indicated by like reference numerals, followed by the reference letter "A".

As illustrated in Figs. 7 and 8, the pulley 21A has the teeth 24A thereof constructed and arranged in such a way that the same provided a substantially trapezoidal cavity 25A between adjacent pulley teeth 24A that is defined by substantially flat side face means 26A, even though the tips 28A of the teeth 24A are rounded as illustrated. However, the bottom 27A of each cavity 25A is substantially flat, as illustrated.

In contrast, the longitudinal cross-sectional configuration of each belt tooth 31A of the belt 23A of this invention is substantially the same as the configurations set forth in Fig. 2 of the aforementioned U.S. Patent to Miller, No. 3,756,091, and would theoretically have the opposed free end portions 49A of the opposed side face means 37A thereof compressed radially outwardly and inwardly toward each other by the amount of areas 53A represented in Fig. 8 as the area bordered by the side faces 26A of the pulley teeth 24A and the dash-dotted lines 54A that depict the normal profile of the tooth 31A when that tooth 31A is fully and uniformly received in the cavity 25A and has the tips 28A of the pulley teeth 24A just engaging the land areas 36A on each side of that tooth 31A as illustrated in Fig. 8. At this time, it can be seen in Fig. 8 that the root means 39A of the belt tooth 31A are fully spaced from the sides 26A of the adjacent pulley teeth 24A in the same manner as the root means 39 of the teeth 31 in the cavities 25 are previously described, whereby it is believed the belt 23A and pulley 21A will function in the manner previously set forth to extend the life of the belt 23A via pre-stressing thereof, as well as to reduce the noise of operation thereof via reduced land slapping thereof.

## Claims

1. The combination of a toothed pulley and a toothed belt that has the belt teeth serially mesh with pulley cavities that are respectively disposed between adjacent pulley teeth and that respectively have bottoms, with each belt tooth having a longitudinal cross-sectional configuration defining a pair of side faces (37); each side face has a free end portion which is remote from an adjacent root means (39), said pair of side faces are spaced apart by a bottom face (38) which defines a radial length, said pulley teeth and said belt teeth are constructed and arranged in such a way that each belt tooth would have said free end portions thereof compressed radially outwardly and inwardly toward each other by the respective adjacent pulley teeth, characterized in that said bottom face is continuously flat or convex and is spaced from said bottom of the pulley cavity if that belt tooth is fully received in said pulley cavity and those respective adjacent pulley teeth are just making contact with the land area of the belt on each side of that belt tooth while being spaced from the respectively root means (39) of that belt tooth.

2. The combination as set forth in claim 1, characterized in that each pulley tooth (24) is substantially curvilinear.

3. The combination as set forth in claim 1 or 2, characterized in that each belt tooth (31) has a longitudinal substantial trapezoidal cross-sectional configuration.

4. The combination as set forth in claim 3, characterized in that said side faces (37) of each of said belt teeth (31) comprises a substantially flat section (40) and a substantially arcuate section (41).

5. The combination as set forth in claim 4, characterised in that said flat section (40) is adjacent said root means (39) and said arcuate section (41) defining at least part of said free end portions (49).

6. The combination as set forth in claim 5, characterized in that said arcuate section (41) is defined by a radius (42) having its center (43) disposed intermediate said side faces (37).

7. The combination as set forth in claim 5, characterized in that said arcuate section (41) joins smotohly with said flat section (40).

8. The combination as set forth in claim 7, characterized in that said flat end surface (38) joins smoothly with said arcuate sections (41).

9. The combination as set forth in anyone of the preceding claims, characterized in that the height of each belt tooth (31) is approximately 0.130 of an inch, the length of said radius (42) of each belt tooth (31) is approximately 0.060 of an inch, and the pitch of said teeth (31) of said belt (23) is apprxomately 0.31496 of an inch (1 inch=25.4 mm).

## Patentansprüche

1. Synchronantriebssystem, bestehend aus einer Kombination von Zahnscheiben und einem Zahnriemen, dessen Zähne hintereinander in die Verteifungen eingreifen, die sich jeweils zwischen benachbarten Zähnen der Scheiben befinden und jeweils einen Boden aufweisen, wobei jeder Riemenzahn im Längsquerschnitt eine Seitenflächenpaar (37) definiert und jede Seitenfläche ein freies Endteil besitzt, das von einem angrenzenden Fußteil (39) entfernt liegt, und das Seitenflächenpaar durch eine Bodenfläche (38) getrennt ist, die eine radiale Länge definiert, wobri die Scheibenzähne und die Riemenzähne derartig ausgelegt und angeordnet sind, daß jeder Riemenzahn freie Endteile aufweist, welche radial nach außen und innen gegeneinander durch die jeweiligen Scheibenzähne zusammengepreßt werden, dadurch gekennzeichnet, daß die Bodenfläche durchgehend flach oder konvex ausgebildet und von dem Boden der Scheibenvertiefung entfernt ist, wenn der Riemenzahn von der Scheibenvertiefung vollständig aufgenommen ist und die jeweils benachbarten Scheibenzähne die Stegfläche des Riemens an jeder Seite des Riemenzahns gerade berühren, während sie von dem jeweiligen Fußteil (39) des Riemenzahns entfernt sind.

2. Synchronantriebssystem nach Anspruch 1, dadurch gekennzeichnet, daß jeder Scheibenzahn (24) im wesentlichen krummlinig ausgebildet ist.

3. Synchronantriebssystem nach Anspruch 1 oder 2, dadurch gekennzeichnet, daß jeder Reimenzahn (31) im wesentlichen eine trapezförmige Längsquerschnittsform aufweist.

4. Synchronantriebssystem nach Anspruch 3, dadurch gekennzeichnet, daß die Seitenflächen (37) des Riemenzahns (31) einen flachen Abschnitt (40) und einen im wesentlichen gebogenen Abschnitt (41) aufweisen.

5. Synchronantriebssystem nach Anspruch 4, dadurch gekennzeichnet, daß der flachen Abschnitt (40) an den Fußteil (39) angrenzt und der gebogenen Abschnitt (41) mindestens einen Teil der freien Endteil (49) definiert.

6. Synchronantriebssystem nach Anspruch 5, dadurch gekennzeichnet, daß der gebogene Abschnitt (41) durch einen Radius (42) definiert ist, dessen Mittelpunkt (43) zwischen den Seitenflächen (37) angeordnet ist.

7. Synchronantriebssystem nach Anspruch 1, dadurch gekennzeichnet, daß der gebogene Abschnitt (41) fließend in den flachen Abschnitt (40) übergeht.

8. Synchronantriebssystem nach Anspruch 7, dadurch gekennzeichnet, daß die flache Endfläche (38) fließend in die gebogenen Abschnitte (41) übergeht.

9. Synchronantriebssystem nach einem der vorstehenden Ansprüche, dadurch gekennzeichnet, daß die Höhe eines jeden Riemenzahns (31) etwa 0,130 inch, die Länges des Radius (42) eines jeden Riemenzahns (31) 0,060 inch und der Abstand der Zähne (31) des Riemens (23) 0,31496 inch beträgt (1 inch=25,4 mm).

**Revendications**

1. La combinaison d'une poulie dentée et d'une courroie dentée dont les dents de la courroie s'engrènent en série avec des cavités de la poulie qui sont respectivement disposées entre des dents adjacentes de la poulie et qui ont respectivement des fonds, chaque dent de la courroie ayant en coupe longitudinale une configuration qui délimite deux faces latérales (37); chaque face latérale présente une partie d'extrémité libre qui est éloignée d'une base (39) adjacente, ladite paire de faces latérales étant écartée d'une face inférieure (38) qui définit une longueur radiale, lesdites dents de poulie et lesdites dentes de courroie sont construites et agencées de manière que chaque dent de courroie ait ses parties d'extrémité libre comprimées radialement vers l'extérieur et vers l'intérieur en direction l'une de l'autre par les dents de poulie adjacentes correspondantes, caractérisée en ce que la face inférieure est continuellement plane ou convexe et écartée dudit fond de la cavité de la poulie si cette dent de courroie est complètement reçue l'intérieur de ladite cavité de la poulie et en ce que ces dents de poulie adjacentes correspondantes viennent tout juste en contact avec la surface des plats de la courroie de chaque côté de la dent de courroie tout en étant écartées du moyen (39) de base correspondant de cette dente de courroie.

2. La combinaison comme énoncé à la revendication 1, caractérisée en ce que chaque dent de poulie (24) est sensiblement curviligne.

3. La combinaison comme énoncé à la revendication 1 ou 2, caractérisée en ce que chaque dent de courroie (31) a en section droite longitudinale une configuration sensiblement trapézoïdale.

4. La combinaison comme énoncé à la revendication 3, caractérisée en ce que lesdites faces latérales (37) de chacune desdites dents de courroie (31) comportent une partie sensiblement plane (40) et une partie sensiblement courbe (41).

5. La combinaison comme énoncé à la revendication 4, caractérisée en ce que ladite partie plane (40) est adjacente à ladite partie de base (39) et à ladite partie courbe (41) en définissant au moins une partie desdites parties d'extrémité libre (49).

6. La combinaison comme énoncé à la revendication 5, caractérisée en ce que ladite partie courbe (41) est définie par un rayon de courbure (42) et un centre (43) situé en un point intermédiaire entre lesdites faces latérales (37).

7. La combinaison comme énoncé à la revendication 5, caractérisée en ce que ladite partie courbe (41) est progressivement réunie à ladite partie plane (40).

8. La combinaison comme énoncé à la revendication 7, caractérisée en ce que ladite surface d'extrémité plane (38) est reliée régulièrement auxdites parties courbes (41).

9. La combinaison comme énonce dans l'une quelconque des revendications précédentes, caractérisée en ce que la hauteur de chacune des dentes de courroie (31) mesure approximativement 0,130 pouce, la longueur dudit rayon (42) de chaque dent de courroie (31) mesure environ 0,060 pouce, et le pas desdites dents (31) de ladite courroie (23) est environ de 0,31496 pouce (1 pouce équivaut à 25,4 mm).

FIG.1

FIG.2

FIG.3

1

FIG.4

FIG.5

FIG.6

2

FIG.7

FIG.8